Europäisches Patentamt

European Patent Office

Office européen des brevets

(19)

(11) Publication number: **0 002 548**
**B1**

(12) **EUROPEAN PATENT SPECIFICATION**

(45) Date of publication of patent specification: **26.05.82**

(51) Int. Cl.³: **C 08 F 8/14, C 09 D 3/74**

(21) Application number: **78200335.4**

(22) Date of filing: **01.12.78**

(54) Process for the preparation of water-dispersible resins, and their use in surface coatings.

(30) Priority: **08.12.77 NL 7713578**

(43) Date of publication of application:
**27.06.79 Bulletin 79/13**

(45) Publication of the grant of the patent:
**26.05.82 Bulletin 82/21**

(84) Designated Contracting States:
**BE DE FR GB IT NL**

(56) References cited:
**FR - A - 2 021 076**
**FR - A - 2 262 676**

(73) Proprietor: **SHELL INTERNATIONALE RESEARCH MAATSCHAPPIJ B.V.**
**Carel van Bylandtlaan 30**
**NL-2596 HR DEN HAAG (NL)**

(72) Inventor: **Van Acker, Eduard Maria Anthonius Alphonsus Joseph**
**Badhuisweg 3**
**NL-1031 CM Amsterdam (NL)**
Inventor: **De Heer, Aart**
**Badhuisweg 3**
**NL-1031 CM Amsterdam (NL)**
Inventor: **Kooymans, Petrus Gerardus**
**Badhuisweg 3**
**NL-1031 CM Amsterdam (NL)**

(74) Representative: **Puister, Antonius Tonnis, Mr. et al,**
**P.O. Box 302**
**NL-2501 CH The Hague (NL)**

Courier Press, Leamington Spa, England.

Process for the preparation of water-dispersible resins, and their use in surface coatings

The invention relates to a process for the preparation of hydroxyl- and carboxyl-containing resins, which are dispersible in water with the aid of a base. Such resins can be used as binders in thermosetting lacquers and paints for the coating of objects.

The advantage of water as a diluent for surface-coating compositions is known: it is non-flammable, and it is inexpensive. The use of water does require, however, an adaptation of the customary binders. Widely used surface-coating compositions are those containing a binder that is made soluble in water; to this end, carboxyl groups are usually incorporated into a binder to an acid number higher than 30, which are then completely or partly neutralized with a base. Since many binders are polymeric substances, the high viscosity of these solutions sometimes presents difficulties, especially when a high concentration is required. Another difficulty is the long drying time that is often required before the surface coating can be enamelled: if water is still present in the surface coating, when this is being enamelled, blistering may result.

Aqueous dispersions in which the binder is dispersed in water instead of dissolved, have as advantages that higher binder concentrations can be used without viscosity problems, and that it is easier to evaporate the water from the surface coating than from a solution; a drawback is usually that surface-active substances or dispersants have to be used for making the dispersion, and for giving it a sufficient stability: such surface-active substances or dispersants generally have an unfavourable effect on the properties of the hardened surface coating; in particular, they increase the water sensitivity.

A process has now been found for preparing resins that are dispersible in water without using surface-active substances or dispersants.

The invention is defined as a process for the preparation of a hydroxyl- and carboxyl-containing resin, dispersible in water by neutralisation with 70—125% of the theoretically required quantity of a base, characterized in that 100 parts by weight of a copolymer component (A), prepared from

(a) 10—60 parts by weight of a vinyl ester of saturated aliphatic monocarboxylic acids in which the carboxyl group is attached to a tertiary or quaternary carbon atom,
(b) 10—50 parts by weight of styrene or vinyl toluene,
(c) 5—25 parts by weight of a hydroxyalkyl ester of an alpha-beta ethylenically unsaturated monocarboxylic acid, and
(d) 0—40 parts by weight of an alkyl ester of an alpha-beta ethylenically unsaturated carboxylic acid,

all these constituents per 100 parts by weight of copolymer, is reacted with from 5 to 25 parts by weight of a component (B) prepared by reaction of trimellitic anhydride and a glycidyl ester of saturated aliphatic monocarboxylic acids in which the carboxyl group is attached to a tertiary or quaternary carbon atom in molecular ratios of from 0.8:1 to 1:1.2.

Preferred is a process wherein component (A) is a copolymer prepared from

(a) 30—40 parts by weight of vinyl ester of saturated aliphatic monocarboxylic acids in which the carboxyl group is attached to a tertiary or quaternary carbon atom,
(b) 20—30 parts by weight of styrene or vinyl toluene,
(c) 10—20 parts by weight of a hydroxyalkyl ester of an alpha-beta ethylenically unsaturated monocarboxylic acid, and
(d) 10—20 parts by weight of an alkyl ester of an alpha-beta ethylenically unsaturated carboxylic acid,

all these constituents per 100 parts by weight of copolymer.

The saturated aliphatic monocarboxylic acids mentioned under (A) (a) and (B) preferably contain from 9 to 11, for instance 10, carbon atoms per molecule; for the sake of brevity, they are also designated "branched monocarboxylic acids". "Aliphatic" comprises in this context both acyclic aliphatic and cyclo-aliphatic.

Component (A)(c) is preferably a 2-hydroxy $C_2$ or $C_3$ alkyl ester of a $C_3$ or $C_4$ ethylenically unsaturated monocarboxylic acid; preferred are hydroxyethyl methacrylate and 2-hydroxypropyl methacrylate; other examples are hydroxyethyl acrylate, and 2-hydroxypropyl acrylate. This component gives hydroxyl functionality for three purposes: conversion with component (B) for incorporating carboxyl functionality, contribution to the hydrophilic balance, which is important for the dispersibility in water, and provision of active groups for "cross-linking" during enamelling.

The styrene or vinyl toluene contributes to the good chemical resistance; it also has a function in the copolymerization with the vinyl esters, as is described in detail in British patent specification No. 1,418,372.

Component (A) (d) contains preferably a $C_1$ to $C_{10}$ alkyl group, and is preferably derived from a $C_3$ or $C_4$ monocarboxylic acid; $C_4$ to $C_{10}$ alkyl groups are preferred to improve the flexibility of the cured coating; examples are butyl acrylate and 2-ethyl hexyl acrylate.

Copolymers as mentioned under (A) are preferably prepared according to the process given in British patent specification 1,418,372. According to this process such vinyl esters of branched monocarboxylic acids are copolymerized in mass with styrene and other monomers at temperatures above 150°C.

Component (B) is a product prepared by reacting trimellitic anhydride and glycidyl esters of branched monocarboxylic acids in molecular ratios from 0.8:1 to 1:1.2 at temperatures up to 150°C. This reaction can be carried out in a solvent, for instance methyl ethyl ketone, in which case the reaction temperature is preferably kept below 100°C, or it is possible to work without a solvent and then temperatures from 80 to 150°C are preferred.

Trimellitic anhydride is a solid with a rather high melting point (168°C); under exothermic reaction it dissolves rapidly in the glycidyl esters mentioned. The reaction product has a low melting point and dissolves readily and completely in the polymeric component (A).

Component (B) is an acid polyester, probably formed by addition of epoxy groups to carboxyl groups, and half-ester formation of the hydroxyl groups with anhydride groups. Although the exact mechanism of the reaction of component (B) with component (A) is not known, such a component (B) reacts as a cyclic carboxylic anhydride. Probably, the half-ester groups in component (B) decompose above 100°C partly into anhydride groups and OH groups (a well-known phenomenon for half esters) and the anhydride groups preferably react then with the OH groups of component (A), which are present in excess.

Per 100 pbw of component (A) it is preferred to take 10—20 pbw of component (B) and these components are caused to react preferably at temperatures between 100 and 150°C. With less than 5 pbw of component (B) per 100 pbw of component (A) the dispersibility in water becomes poor; with more than 25 pbw of component (B) per 100 pbw of component (A) a resin is obtained which after neutralization, becomes water-soluble. A strict dividing line between solubility and dispersibility cannot be drawn.

Dispersibility in water is attained by neutralizing the resin thus obtained with 70—125% of the theoretically required quantity of a base, preferably ammonia or an amine. For a good dispersibility and stability of the dispersion the quantity of base is set to such a level that the pH of the dispersion is 7—8, preferably 7.5. Neutralizing is preferably effected at elevated temperature with vigorous stirring. In this way concentrated aqueous resin dispersions can be made, which may—if desired—be diluted further with water. Such resin dispersions can be processed further into paints and lacquers by adding pigments, extenders and other auxiliary materials for paints, such as "cross-linking" resins (urea resins, melamine resins, phenolic resins), for instance in weight ratios from 90/10 to 70/30. Such resin dispersions have a good storage stability. It is also possible to add small amounts of organic solvents for instance in order to modify spraying properties. The dispersions and the paints prepared from them can be applied to objects by the conventional techniques, such as by a brush or a roller, by spraying or immersion or by electrolytic deposition by means of a direct current on a metal object connected as an anode.

After drying the paint layers can be enamelled at the usual temperatures, such as 120—150°C; the enamelled surface coatings have a good bond strength, gloss, hardness, flexibility and resistance to weather and chemicals. The present dispersions may, for instance, be used for applying one-layer systems for all kinds of purposes, or for applying top coats to car bodies.

The invention is illustrated by examples. Parts and percentages therein are parts by weight (pbw) and percentages by weight, respectively, unless stated otherwise.

The vinyl and glycidyl esters of branched acids mentioned below are vinyl and glycidyl esters, respectively, of saturated aliphatic monocarboxylic acids in which the carboxyl group is attached to a tertiary or quaternary carbon atom and which carboxylic acids contain 10 carbon atoms per molecule. Both types of ester are liquid at room temperature.

"Initiator B" is di-tert-butyl peroxide.

The glycidyl ester and epoxy equivalent weight 246.

Example 1
Preparation of component (A)

35 pbw vinyl ester of branched acids are introduced into a reactor equipped with stirrer, heating jacket and cooling device. The temperature is brought to 170°C. A mixture of 28 pbw styrene, 17 pbw hydroxyethyl methacrylate, 16 pbw butyl acrylate and 2 pbw "Initiator B" is then gradually added in 5 hours' time, while the temperature is maintained at 170°C. The product is kept at 170°C for a further 40 minutes and then cooled to 135°C.

Preparation of component (B)

Glycidyl ester of branched acids (1.04 mol) and chips or powder of trimellitic anhydride (1.0 mol; anhydride content 95—96% w; the rest is trimellitic acid) are introduced into a reactor equipped with stirrer, heating jacket, and cooling device. This mixture is gently heated to 80°C, at which temperature an exothermic reaction starts. The temperature is then allowed to rise to at most 130°C with stirring and, if necessary, with cooling. When the heat development stops after about 15 minutes' time, heating is continued at 140°C for 30 minutes, benzyldimethylamine (0.025 mol) is added as a catalyst, and heating is continued for a further 30 minutes at 140—145°C. The product is then poured out into trays and cooled.

Preferably no air or nitrogen is passed through the reaction mixture, and stirring should be done at low speed.

A product thus prepared in various batches had the following properties:

Total acid content
(acid+anhydride)          230—240 meq./100 g
Anhydride                 15—25 meq./100 g
Epoxy content             <3 meq./100 g

Reaction of components (A) and (B)

To the reactor containing the above-mentioned quantity of component (A) 15 pbw of component (B) are added, and the temperature is maintained at 135°C for 30 minutes with stirring. Then the resin is cooled, for instance by pouring out into trays. The product is a clear, almost colourless, glassy resin having the following properties:

$\overline{M}_n$              2500
$\overline{M}_w$              50000
$T_g$                273 K
OH content            135 meq/100 g
Acid content          26 meq/100 g
Free vinyl ester content  <1% w

Dispersion in water

Into a reactor equipped with a powerful impeller, a heating jacket and a cooling device, 1000 pbw of the abovementioned resin are introduced. After heating to 90°C a solution of 17.4 pbw of 25% ammonia (0.255 mol) in 232.6 pbw demineralized water is added with vigorous stirring in 30 minutes' time. Another 750 pbw of demineralized water are then added and, if necessary, the pH is adjusted to 7.5. This dispersion contains 50 %w resin and is stable at room temperature.

Preparation of a paint

In a ball mill the following mixture is ground:

the above-mentioned resin
dispersion                          645.3 pbw
hexamethoxymethylmelamine
resin                               56.8 pbw
titanium dioxide pigment            265.6 pbw
demineralized water                 32.3 pbw

In this paint the weight ratio of the two types of resin is 85/15, and the pigment/binder ratio 0.7/1.0; the pH is 7.5 and the solids content 64.5 %w. The paint was diluted with demineralized water to a solids content of 62 %w to obtain a spray viscosity of 17 seconds Ford 4 cup at 25°C.

Evaluation of the paint

The paint was sprayed on steel panels, both bonderized ones and panels which had only been degreased. These panels were enamelled for 20 minutes at 150°C. The paint films had the following properties:

|                                          | bonderized | degreased |
|------------------------------------------|------------|-----------|
| Hardness (König)                         | 150        | 150       |
| Gloss (Lange 45°/45°)                    | 90—95%     | 90—95%    |
| Adhesion (Gitterschnitt)                 | Gt 0       | Gt 0      |
| Erichsen slow penetration                | >7.5 mm    | >7.5 mm   |
| Erichsen impact resistance, direct       | 3 mm       | 3 mm      |
| reverse                                  | 3 mm       | 3 mm      |
| Ford impact resistance, direct           | 28 cmkg    | 13.5 cmkg |
| reverse                                  | 5.6 cmkg   | 6.75 cmkg |
| Resistance to 0.5% detergent, 80°C       |            |           |
| after 24 hours                           | ++         | blistering 2—3 M |
| after 48 hours                           | +; a       | —         |
| Salt spray (200 h)                       | <1 mm      |           |
|                                          | subsurface rust; + |   |

++: no loss of gloss, decoloration or blistering.
+: no blistering or loss of gloss.
a: film becomes somewhat soft, but is hard again after 1 hour.
—: total loss of adhesion.

A similar paint was prepared with a more reactive melamine resin (trade mark "Resimene" 2720); films thereof had a solvent resistance of 10—15 minutes.

Example 2

Example 1 was repeated, with the difference that amounts of constituents for component (A) were as follows:

vinyl ester                20 pbw
styrene                    35 pbw
hydroxyethyl methacrylate  15 pbw
butyl acrylate             28 pbw

The reaction product of components (A) and (B) had

$\overline{M}_n$         3500
$T_g$           278 K
free vinylester      0,5 %w

A paint composition and evaluation as in example 1 had nearly identical evaluation results: on bonderized panels the hardness (König) was 165, the gloss 85—90, the Erichsen slow penetration 7.0 mm, the Ford impact direct 35 cm kg, reverse 6 cm kg, and the salt spray resistance (200 h) 1.5 mm subsurface rust; +.

Example 3
Example 1 was repeated with a difference in component (A) as follows:

| | |
|---|---|
| vinyl ester | 25 pbw |
| styrene | 45 pbw |
| hydroxyethyl methacrylate | 15 pbw |
| 2-ethyl hexyl acrylate | 15 pbw |

Reaction product of (A) and (B) had $\overline{M}_n$=3000, $T_g$=280 K, and free vinyl ester 0.5 %w.
Evaluation results: the cured films were slightly harder and less flexible:
Hardness (König) 175, Ford impact resistance direct 20 cm kg, reverse 5 cm kg.

Example 4
Example 1 was repeated with a different component (A):

| | |
|---|---|
| vinyl ester | 45 pbw |
| styrene | 25 pbw |
| hydroxyethyl methacrylate | 15 pbw |
| butyl acrylate | 15 pbw |

The reaction product of (A) and (B) had $T_g$ 270 K, and contained 0.95 %w of free vinyl ester. The hardness of the cured films (König) was 150, the Ford impact resistance direct 40 cm kg, reverse 10 cm kg, the salt spray resistance (400 h)<1 mm underrust;+.

Claims

1. Process for the preparation of a hydroxyl- and carboxyl-containing resin, dispersible in water by neutralisation with 70—125% of the theoretically required quantity of a base, characterized in that 100 parts by weight of a copolymer component (A), prepared from

(a) 10—60 pbw of a vinyl ester of saturated aliphatic monocarboxylic acids in which the carboxyl group is attached to a tertiary or quaternary carbon atom,
(b) 10—50 parts by weight of styrene or vinyl toluene,
(c) 5—25 parts by weight of a hydroxyalkyl ester of an alpha-beta ethylenically unsaturated monocarboxylic acid, and
(d) 0—40 parts by weight of an alkyl ester of an alpha-beta ethylenically unsaturated carboxylic acid, all these constituents per 100 parts by weight of copolymer, is reacted with from 5 to 25 pbw of a component (B) prepared by reaction of trimellitic anhydride and a glycidyl ester of saturated aliphatic monocarboxylic acids in which the carboxyl group is attached to a tertiary or quaternary carbon atom in molecular ratios of from 0.8:1 to 1:1.2.

2. Process as claimed in claim 1, characterized in that component (A) is a copolymer prepared from

(a) 30—40 parts by weight of a vinyl ester of saturated aliphatic monocarboxylic acids in which the carboxyl group is attached to a tertiary or quaternary carbon atom,
(b) 20—30 parts by weight of styrene or vinyl toluene,
(c) 10—20 parts by weight of a hydroxyalkyl ester of an alpha-beta ethylenically unsaturated monocarboxylic acid, and
(d) 10—20 parts by weight of an alkyl ester of an alpha-beta ethylenically unsaturated carboxylic acid, all these constituents per 100 parts by weight of copolymer.

3. Process as claimed in claim 1 or 2, characterized in that the monocarboxylic acids mentioned under both (A) (a) and (B) contain from 9 to 11 carbon atoms per molecule.

4. Process as claimed in claims 1 to 3, characterized in that the component (A) (c) is hydroxyethyl or 2-hydroxypropyl methacrylate.

5. Process as claimed in claims 1 to 4, characterized in that component (A) (d) is an alkyl ester of an alpha-beta ethylenically unsaturated monocarboxylic acid.

6. Process as claimed in claim 5, characterized in that component (A) (d) is a butyl ester.

7. Process as claimed in claims 1 to 6, characterized in that 10—20 parts by weight of component (B) per 100 parts by weight of component (A) are taken.

8. A process as claimed in claims 1 to 7, characterized in that the reaction of components (A) and (B) is carried out at temperatures between 100 and 150°C.

9. Process for the preparation of an aqueous coating dispersion, characterized in that a resin prepared as claimed in claims 1 to 8 is dispersed in an aqueous solution of ammonia.

10. Objects, completely or partly covered with a surface coating applied with use of an aqueous coating dispersion prepared as claimed in claim 9.

Revendications

1. Procédé de préparation d'une résine hydroxylée et carboxylée, dispersable dans l'eau, par neutralisation au moyen de 70 à 125% de la quantité théoriquement nécessaire d'une base, caractérisé en ce que 100 parties en poids d'un constituant copolymère (A), préparé à partir de

(a) 10 à 60 parties en poids d'un ester de vinyle d'acides monocarboxyliques aliphatiques saturés dans lesquels le groupe carboxyle est fixé sur un atome de carbone tertiaire ou quaternaire,

(b) 10 à 50 parties en poids de styrène ou de vinyl-toluène,

(c) 5 à 25 parties en poids d'un ester d'hydroxyalcoyle d'un acide monocarboxylique éthyléniquement non saturé en alpha, bêta, et

(d) 0 à 40 parties en poids d'un ester d'alcoyle d'un acide carboxylique éthyéniquement non saturé en alpha, bêta, tous ces constituants pour 100 parties en poids de copolymère, sont mises à réagir avec 5 à 25 parties en poids d'un constituant (B) préparé par réaction d'anhydride trimellitique et d'un ester de glycidyle d'acides monocarboxyliques aliphatiques saturés dans lesquels le groupe carboxyle est fixé sur un atome de carbone tertiaire ou quaternaire dans des rapports moléculaires compris entre 0,8:1 et 1:1,2.

2. Procédé selon la revendication 1, caractérisé en ce que le constituant (A) est un copolymère préparé à partir de

(a) 30 à 40 parties en poids d'un ester de vinyle d'acides monocarboxyliques aliphatiques saturés dans lesquels le groupe carboxyle est fixé sur un atome de carbone tertiaire ou quaternaire,

(b) 20 à 30 parties en poids de styrène ou vinyltoluène,

(c) 10 à 20 parties en poids d'un ester d'hydroxyalcoyle d'un acide monocarboxylique éthyléniquement non saturé en alpha, bêta, et

(d) 10 à 20 parties en poids d'un ester d'alcoyle d'un acide carboxylique éthyléniquement non saturé en alpha, bêta, tous ces constituants pour 100 parties en poids de copolymère.

3. Procédé selon l'une des revendications 1 et 2, caractérisé en ce que les acides monocarboxyliques mentionnés sous (A) (a) et sous (B) contiennent de 9 à 11 atomes de carbone par molécule.

4. Procédé selon l'une des revendications 1 à 3, caractérisé en ce que le constituant (A) (c) est du méthacrylate d'hydroxyéthyle ou de 2-hydroxypropyle.

5. Procédé selon l'une des revendications 1 à 4, caractérisé en ce que le constituant (A) (d) est un ester d'alcoyle d'un acide monocarboxylique éthyléniquement non saturé en alpha, bêta.

6. Procédé selon la revendication 5, caractérisé en ce que le constituant (A) (d) est un ester de butyle.

7. Procédé selon l'une des revendications 1 à 6, caractérisé en ce qu'on utilise 10 à 20 parties en poids de constituant (B) pour 100 parties en poids de constituant (A).

8. Procédé selon l'une des revendications 1 à 7, caractérisé en ce que la réaction des constituants (A) et (B) est conduite à des températures comprises entre 100 et 150°C.

9. Procédé pour la préparation d'une dispersion aqueuse de revêtement, caractérisé en ce qu'une résine préparée selon l'une des revendications 1 à 8 est dispersée dans une solution aqueuse d'ammoniac.

10. Objets complètement ou partiellement couverts d'un revêtement de surface appliqué en utilisant une dispersion aqueuse de revêtement préparée selon la revendication 9.

**Patentansprüche**

1. Verfahren zur Herstellung eines Hydroxyl- und Carboxylgruppen enthaltenden Harzes, das durch Neutralisieren mit 70 bis 125% der theoretisch benötigten Menge einer Base in Wasser dispergierbar ist, dadurch gekennzeichnet, dass 100 Gew.-Teile einer Copolymerisatkomponente (A), hergestellt aus (a) 10 bis 60 Gew.-Teilen eines Vinylesters von gesättigten aliphatischen Monocarbonsäuren, deren Carboxylgruppe an ein tertiäres oder quaternäres Kohlenstoffatom gebunden ist, (b) 10 bis 50 Gew.-Teilen Styrol oder Vinyltoluol, (c) 5 bis 25 Gew.-Teilen eines Hydroxyalkylesters einer $\alpha,\beta$-äthylenisch ungesättigten Monocarbonsäure und (d) 0 bis 40 Gew.-Teilen eines Alkylesters einer $\alpha,\beta$-äthylenisch ungesättigten Carbonsäure, wobei alle diese Bestandteile je 100 Gew.-Teile Copolymerisat gerechnet sind, umgesetzt werden mit 5 bis 25 Gew.-Teilen einer Komponente (B), hergestellt durch Umsetzung von Trimellithsäureanhydrid mit einem Glycidylester von gesättigten aliphatischen Monocarbonsäuren, deren Carboxylgruppe an ein tertiäres oder quaternäres Kohlenstoffatom gebunden ist, in einem Mol-Verhältnis von 0,8 zu 1 bis 1 zu 1,2.

2. Verfahren nach Anspruch 1, dadurch gekennzeichnet dass die Komponente (A) ein Copolymerisat ist, hergestellt aus (a) 30 bis 40 Gew.-Teilen eines Vinylesters von gesättigten aliphatischen Monocarbonsäuren, deren Carboxylgruppe an ein tertiäres oder quaternäres Kohlenstoffatom gebunden ist, (b) 20 bis 30 Gew.-Teile Styrol oder Vinyltoluol, (c) 10 bis 20 Gew.-Teilen eines Hydroxyalkylesters einer $\alpha,\beta$-äthylenisch ungesättigten Monocarbonsäure und (d) 10 bis 20 Gew.-Teilen eines Alkylesters einer $\alpha,\beta$-äthylenisch ungesättigten Carbonsäure, wobei alle diese Bestandteile auf 100 Gew.-Teile Copolymerisat bezogen sind.

3. Verfahren nach Anspruch 1 oder 2, dadurch gekennzeichnet, dass die unter (A) (a) und (B) genannten Monocarbonsäuren 9 bis 11 Kohlenstoffatome je Molekül enthalten.

4. Verfahren nach den Ansprüchen 1 bis 3, dadurch gekennzeichnet, dass die Komponente (A) (c) Hydroxyäthyl- oder 2-Hydroxypropyl methacrylat ist.

5. Verfahren nach den Ansprüchen 1 bis 4, dadurch gekennzeichnet, dass die Komponente (A) (d) ein Alkylester einer $\alpha,\beta$-äthylenisch ungesättigten Monocarbonsäure ist.

6. Verfahren nach Anspruch 5, dadurch gekennzeichnet, dass die Komponente (A) (d) ein Butylester ist.

7. Verfahren nach den Ansprüchen 1 bis 6, dadurch gekennzeichnet, dass 10 bis 20 Gew.-Teile Komponente (B) je 100 Gew.-Teile Komponente (A) eingesetzt werden.

8. Verfahren nach den Ansprüchen 1 bis 7, dadurch gekennzeichnet, dass die Reaktion der Komponenten (A) und (B) bei Temperaturen zwischen 100 und 150°C ausgeführt wird.

9. Verfahren zur Herstellung einer wässrigen Beschichtungsdispersion, dadurch gekennzeichnet, dass ein Harz, hergestellt wie in den Ansprüchen 1 bis 8 beansprucht, in einer wässrigen Ammoniaklösung dispergiert wird.

10. Erzeugnisse, vollständig oder teilweise überzogen mit einer Oberflächen-Beschichtung, aufgebracht unter Anwendung einer gemäss Anspruch 9 hergestellten wässrigen Beschichtungsdispersion.